# EUROPEAN PATENT APPLICATION

(11) **EP 1 773 029 A1**
(43) Date of publication of application: **11.04.2007**
(21) Application number: 06016342.5
(22) Date of filing: 04.08.2006
(51) Int. Cl.: H04M 1/02

(54) **Sliding-type portable communication apparatus and sliding device thereof, upper part of device moving along a curved way**

(30) Priority: 07.10.2005 KR 20050094357
(71) Applicant: Samsung Electronics Co., Ltd., Suwon-si, Gyeonggi-Do (KR)
(72) Inventor: Yoon, Yoo-Seok c/oSamsung Electronics Co., Ltd., Suwon-si, Gyeonggi-do (KR); Jung, Soo-Ik c/oSamsung Electronics Co., Ltd., Suwon-si, Gyeonggi-do (KR)
(74) Representative: Lang, Johannes

(57) **Abstract**

A curved sliding-type portable communication apparatus and a sliding device thereof are provided. The sliding-type portable communication apparatus includes a main body which includes a plurality of first keys on its top surface and a slider which includes a display device on its top surface, is given a closing force within a predetermined distance from the longitudinal direction of the main body while facing the main body, moves in a curved fashion with an opening force beyond the predetermined distance, provides easy initial movement through the curved movement, and opens and closes the top surface of the main body. Thus, it is easy to open and close the sliding-type portable communication apparatus using the thumb while gripping the sliding-type portable communication apparatus by the hand.

## Description

### BACKGROUND OF THE INVENTION

### 1. Field of the Invention

The present invention generally relates to a portable communication apparatus such as a Digital Multimedia Broadcasting (DMB) phone, a game phone, a chatting phone, a camera phone, an MP3 phone, a cellular phone, a Personal Communication Service (PCS) phone, a Personal Digital Assistant (PDA), and a Hand Held Phone (HHP). More particularly, the present invention relates to a curved sliding-type portable communication apparatus that can be easily opened/closed and a sliding device thereof.

### 2. Description of the Related Art

In general, a "portable communication apparatus" refers to an electronic apparatus carried with a user to perform wireless communication. In terms of portability, designs of such portable communication apparatuses tend to be compact, slim, and light, and also include multimedia availability for a wide variety of functions. Future portable communication apparatuses are expected to incorporate greater multi-functionality and multi-purpose utilization. Future portable communication apparatuses will also be more compact and light and will be modified to be suitable for various multimedia environments or Internet environments. Additionally, such portable communication apparatuses are now commonly used throughout the world, and are considered an indispensable part of everyday life.

Conventional portable communication apparatuses may be classified into various types according to their appearance. For example, conventional portable communication apparatuses may be classified as bar-type portable communication apparatuses, flip-type portable communication apparatuses, and folder-type portable communication apparatuses. The bar-type portable communication apparatus has a single housing shaped like a bar. The flip-type portable communication apparatus has a flip which is pivotably mounted to a bar-shaped housing by a hinge device. The folder-type portable communication apparatus has a folder coupled to a single bar-shaped housing by a hinge device to allow the folder to be rotated in order to be folded towards or unfolded away from the housing.

Further, portable communication apparatuses may be classified into neck wearable type communication apparatuses and wrist wearable type communication apparatuses according to the position in which a user puts on the communication apparatus. The neck wearable type communication apparatus is worn by a user around the neck using a string, while the wrist wearable type communication apparatus is worn by a user around the wrist.

Additionally, portable communication apparatuses may be further classified as rotation-type communication apparatuses and sliding-type communication apparatuses based upon the way the communication apparatuses are opened or closed. In the rotation-type portable communication apparatus, two housings are coupled to each other to allow one housing to rotate open or closed relative to the other while facing each other. In the sliding-type portable communication apparatus, two housings are coupled to each other to allow one housing to slide along a longitudinal direction to open or close the sliding-type portable communication apparatus.

Conventional portable communication apparatuses tend to transmit data at a high speed in addition to performing voice communication. For example, according to the increased demand by consumers, portable communication apparatuses tend to provide a service using a wireless communication technology capable of transmitting data at a high speed.

Current portable communication apparatuses also are generally equipped with a camera lens which enables each of the communication apparatuses to transmit an image signal. Current conventional portable communication apparatuses may have an external or imbedded camera lens module which allows a user to transmit an image or to take a photograph of.

However, conventional sliding-type portable communication apparatuses suffer from a limited convenience in opening or closing, because a sliding housing linearly slides along a longitudinal direction of a main body hosing. Opening or closing the conventional sliding-type portable communication apparatus is not convenient. Also, the thumb experiences fatigue when the sliding-type portable communication apparatus is opened/closed by sliding up or down the sliding housing using the thumb while being gripped by the hand.

Accordingly, there is a need for an improved sliding-type device that can be opened and closed easily.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a sliding-type portable communication apparatus that can be easily opened/closed and a sliding device thereof.

It is another object of an exemplary embodiment of the present invention to provide a sliding-type portable communication apparatus that can be opened by sliding using the thumb while being gripped by the hand and a sliding device thereof.

It is also another object of an exemplary embodiment of the present invention to provide a sliding-type portable communication apparatus that is held at a specific rotation angle while being opened/closed to be conveniently used in a specific mode related to a wide screen, for example, a Digital Multimedia Broadcasting (DMB) mode, and a sliding device thereof.

It is yet another object of an exemplary embodiment of the present invention to provide a slim portable communication apparatus with two openings that provide fan-shaped link moving spaces in a diagonal direction of an upper frame, and a sliding device thereof.

It is still another object of an exemplary embodiment of the present invention to provide a sliding device that provides a fan-shaped recess in a lower frame to prevent interruption of rotation of a flexible printed circuit, thereby improving reliability.

According to one aspect of an exemplary embodiment of the present invention, there is provided a sliding-type portable communication apparatus. The sliding-type portable communication apparatus includes a main body which includes a plurality of first keys on its top surface and a slider which includes a display device on its top surface. The sliding-type portable communication apparatus may have a closing force within a predetermined distance from the longitudinal direction of the main body while facing the main body, moves in a curved fashion with an opening force beyond the predetermined distance, allows easy initial movement through the curved movement, and opens and closes the top surface of the main body. Therefore, providing easier opening and closing of the sliding-type portable communication apparatus using the thumb while gripping the sliding-type portable communication apparatus by the hand.

According to another aspect of an exemplary embodiment of the present invention, a semi-automatic sliding device of a sliding-type portable communication apparatus is provided. A main body and a slider are included and are opened and closed by moving on the main body. The semi-automatic sliding device includes a lower frame, an upper frame, an upper cap, and a driving mechanism. The upper frame moves on the lower frame while facing the lower frame. The upper cap is combined with the upper frame to cover the upper frame while facing the upper frame. The driving mechanism is mounted between the upper cap and the lower frame, moves the upper frame on the lower frame in a curved fashion along a predetermined trace while binding the upper frame and the lower frame in such a way to prevent the upper frame and the lower frame from being separated from each other, and provides a moving force of the upper frame.

According to further another aspect of an exemplary embodiment of the present invention, a semi-automatic sliding device of a sliding-type portable communication apparatus is provided. A main body and a slider are included and are opened and closed by moving on the main body. The semi-automatic sliding device includes an upper frame and a lower frame that face each other, an upper cap which is combined with the upper frame to cover the upper frame while facing the upper frame, at least one link means which binds the upper frame and the lower frame to prevent the upper frame and the lower frame from being separated from each other is connected to at least two axis means to provide a curve as a sliding direction of the upper frame, and has one end that rotates with respect to a first hinge axis by one selected from the axis means, a center that rotates with respect to a second hinge axis by another selected from the axis means, and the other end that rotates with respect to the first hinge axis and the second hinge axis, and an elastic body whose one end is connected to the other end of the link means to provide a clockwise rotating force within a predetermined angle and a counterclockwise rotating force beyond the predetermined angle as a moving force of the upper frame.

### BRIEF DESCRIPTION OF THE DRAWINGS

The above and other exemplary objects, features and advantages of certain exemplary embodiments of the present invention will be more apparent from the following detailed description when taken in conjunction with the accompanying drawings in which:
FIG. 1 is a perspective view illustrating a curved sliding-type portable communication apparatus that is entirely closed according to an exemplary embodiment of the present invention;
FIG. 2 is a perspective view illustrating a curved sliding-type portable communication apparatus that is held in a fixed position while it is opened/closed according to an exemplary embodiment of the present invention;
FIG. 3 is a perspective view illustrating a curved sliding-type portable communication apparatus that is entirely opened according to an exemplary embodiment of the present invention;
FIG. 4 is an exploded perspective view illustrating a sliding device used in a curved sliding-type portable communication apparatus viewed from the top, in which an elastic body is excluded according to an exemplary embodiment of the present invention is;
FIG. 5 is an exploded perspective view illustrating a sliding device according to an exemplary embodiment of the present invention that is viewed from the bottom, in which an elastic body is excluded;
FIG. 6 is a cross-sectional view of a first lever according to an exemplary embodiment of the present invention;
FIG. 7 is a cross-sectional view of a second lever according to an exemplary embodiment of the present invention;
FIGs. 8A through 8C are perspective views sequentially illustrating an upper frame that moves stepwise on a lower frame according to an exemplary embodiment of the present invention;
FIGs. 9A through 9C are perspective views sequentially illustrating a first lever, a second lever, and a flexible printed circuit that moves move stepwise on the bottom of an upper frame according to an exemplary embodiment of the present invention;
FIGs. 10 through 12 are plane views illustrating the operation states of a driving source used in the driving mechanism of a sliding device according to an exemplary embodiment of the present invention;
FIG. 13 is a perspective view of a damper used in a sliding device according to an exemplary embodiment of the present invention; and
FIGs. 14 through 16 are plane views illustrating the operation states of another driving source used in the driving mechanism of a sliding device according to an exemplary embodiment of the present invention.

Throughout the drawings, the same drawing reference numerals will be understood to refer to the same elements, features, and structures.

### DETAILED DESCRIPTION OF EXEMPLARY EMBODIMENT

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

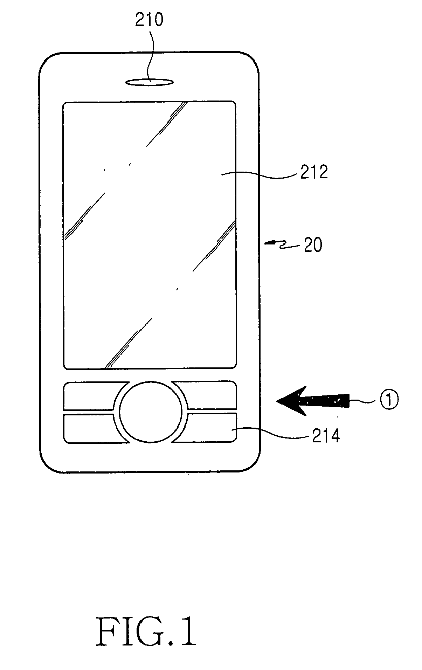

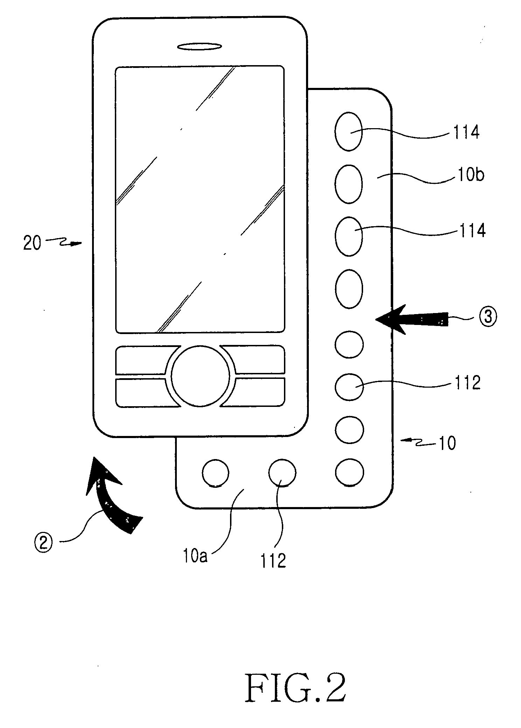

As illustrated in FIGs. 1 through 3, a portable communication apparatus according to an exemplary embodiment of the present invention is of a sliding type that can be opened/closed more easily. According to an exemplary embodiment of the present invention, the portable communication apparatus includes a main body 10 and a slider 20 and is opened by sliding the slider 20 to the left (indicated by an arrow (1)) using the thumb. In particular, the slider 20 moves on the main body 10 in a curved fashion to open/close its top surface. The main body 10 and the slider 20 have box shapes corresponding to each other and extend in a board shape and a linear shape. A sliding device is provided between the main body 10 and the slider 20. The slider 20 moves stepwise on the main body 10. The slider 20 may be in a closed position and an opened position on the main body 10, but it may also be held in a specific moving position by a holding force while it is opened or closed as illustrated in FIG. 2. In FIG. 2, a specific mode, for example, a Digital Multimedia Broadcasting (DMB) mode may be provided.

While facing the main body 10, the slider 20 is given a closing force within a predetermined distance from the longitudinal direction of the main body 10, and is given an opening force beyond the predetermined distance to move in a curved fashion. This prevents a user from having to use an initial pushing force.

In the top surface of the main body 10, a main body horizontal region 10a and a main body vertical region 10b are gradually opened or closed by the movement of the slider 20, in which the main body horizontal region 10a is gradually enlarged and the main body vertical region 10b is enlarged and then reduced. In particular, a plurality of first keys 112 are arranged on the main body horizontal region 10a and a plurality of second keys 114 are arranged on the main body vertical region 10b. FIG. 2 illustrates the main body horizontal region 10a and the main body vertical region 10b.

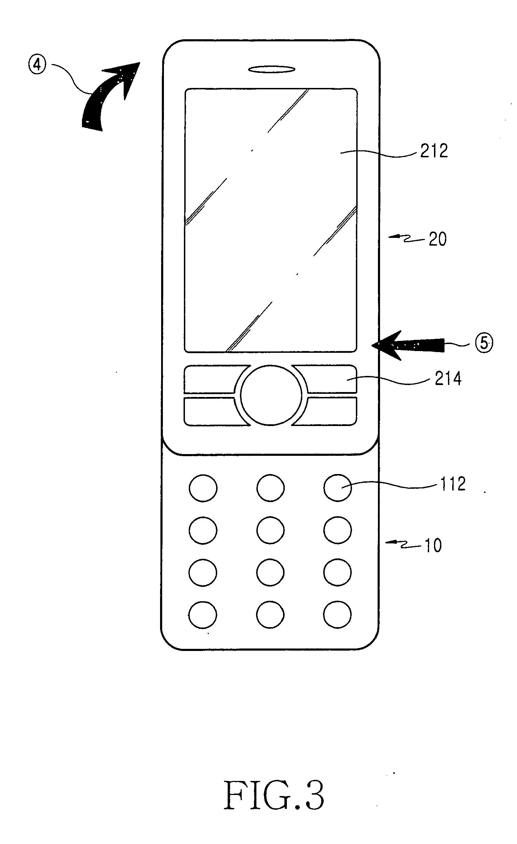

The initial movement of the slider 20 is made by a user's forced push action in the direction indicated by the arrow (1). FIG. 2 illustrates a state in which the user continues to push the slider 20 using the thumb. In FIG. 2, an arrow (2) indicates the movement direction of the slider 20 and indicates a direction that curves clockwise. If the user forcedly pushes the slider 20 in a direction indicated by an arrow (3), the slider 20 is in the state as illustrated in FIG. 3. In FIG. 3, an arrow (4) indicates the movement direction of the slider 20 and indicates a direction that curves clockwise. In FIG. 3, an arrow (5) indicates a direction in which a closing force is applied when the slider 20 is entirely opened. FIGs. 1 through 3 sequentially show a process of opening/closing the portable communication apparatus using a semi-automatic sliding device.

The user's initial pushing force is provided by pushing the slider 20 from a side of the slider 20, such as, in the direction indicated by the arrow (1) and the side of the slider 20 is perpendicular to the longitudinal direction of the slider 20. In other words, the arrow (1) is perpendicular to the side of the slider 20.

The configuration of a sliding device that semi-automatically slides the slider 20 in a curved fashion will be described with reference to the accompanying drawings.

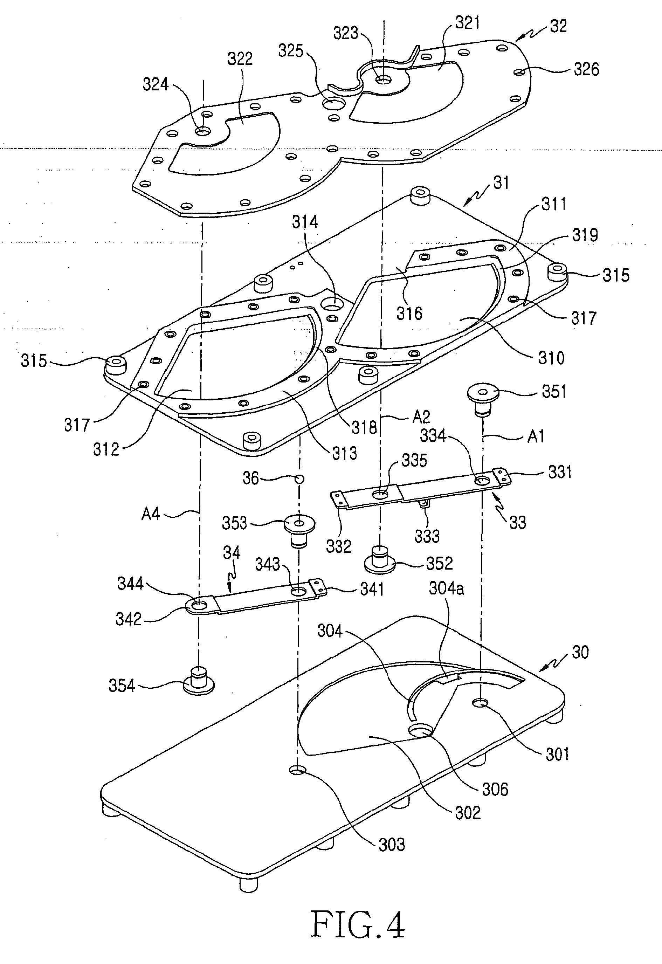

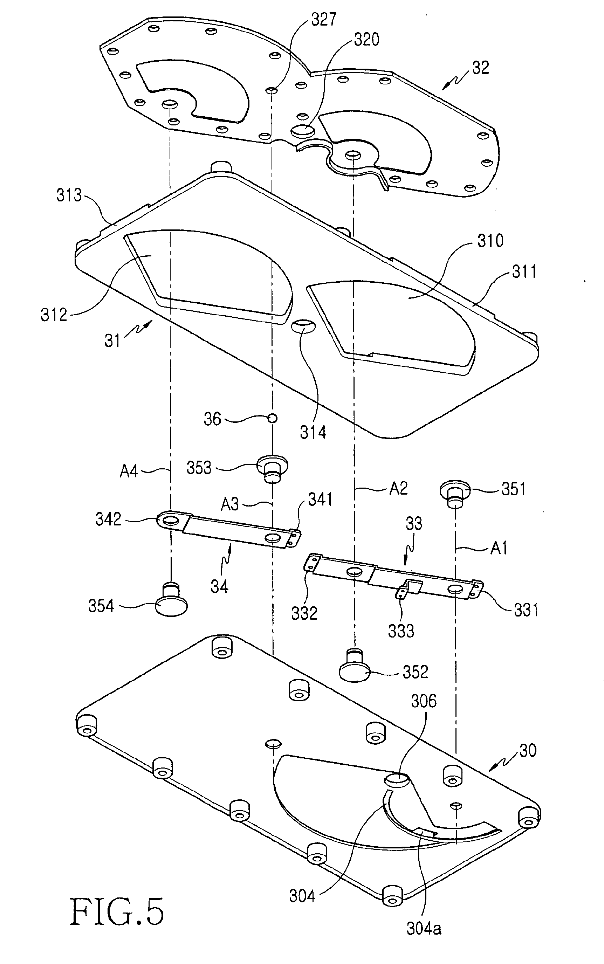

As illustrated in FIGs. 4 and 5, a sliding device used in the sliding-type portable communication apparatus according to an exemplary embodiment of the present invention includes an upper frame 31, a lower frame 30, and a driving mechanism for semi-automatically moving the upper frame 31 on the lower frame 30 in a curved fashion. The driving mechanism includes at least one link means 33 and 34, at least two axis means 351, 352, 353, and 354, and an elastic body. The elastic body is not shown in FIGs. 4 and 5, but will be described later.

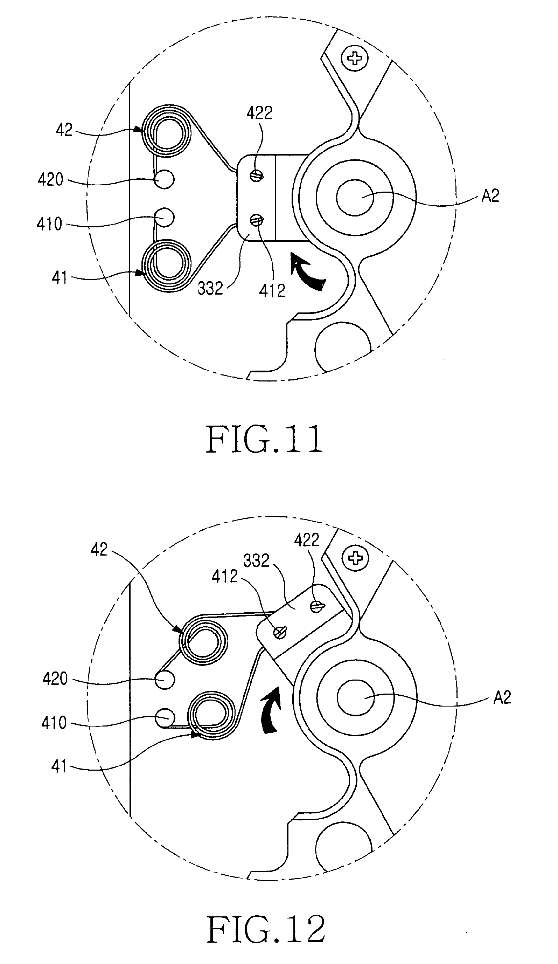

In the driving mechanism, an upper cap 32 is vertically combined with the upper frame 31 by an engaging member (not shown) to stably receive the operations of the link means 33 and 34 and the axis means 351, 352, 353, and 354. The link means 33 and 34 and the axis means 351, 352, 353, and 354 provide a curved sliding movement of the upper frame 31 and the elastic body illustrated in FIGs. 11 through 13 and provide a semi-automatic driving force of the upper frame 31. By the driving mechanism, the upper frame 31 moves on the lower frame 30 in a curved fashion along a predetermined trace while facing the lower frame 30.

The link means 33 and 34 are connected by the axis means 351, 352, 353, and 354 between the lower frame 30 and the upper cap 32 to provide a curved sliding direction for the upper frame 31 and bind the upper frame 31 and the lower frame 30 so the upper frame 31 and the lower frame 30 are not separated from each other and face each other. The elastic body (41 and 42 of FIG. 11) is combined with the link means 33 and 34 to provide a counterclockwise rotating force within a predetermined angle and a clockwise rotating force beyond the predetermined angle. For example, the elastic body provides the moving force of the upper frame 31.

In the upper frame 31, at least one opening, such as, a first opening 310 or a second opening 312, are formed in parallel in a diagonal direction of the upper frame 31. The first opening 310 and the second opening 312 are fan-shaped. The first opening 310 and the second opening 312 are arranged in parallel in a diagonal direction of the upper frame 31 to maximize a mounting space and to minimize the size of the upper frame 31. This results in minimizing the horizontal and vertical sizes of the upper frame 31. The first opening 310 and the second opening 312 are fan-shaped in consideration of a trace generated by the rotation of the link means 33 and 34.

The first opening 310 is reinforced with a first protrusion 311 having a predetermined thickness along its circumference. The second opening 312 is reinforced with a second protrusion 313 having a predetermined thickness along its circumference. The first protrusion 311 is not formed in an edge region of the first opening 310, and a through opening is formed in the edge region to allow a portion of a link means 332 to penetrate the through opening 316. A third opening 314 is formed between the first opening 310 and the second opening 312 to allow a flexible printed circuit (not shown) to penetrate the third opening 314. An engaging boss 315 is formed in the edge region of the upper frame 31 except for the first opening 310, the second opening 312, the first protrusion 311, and the second protrusion 313. A plurality of engaging holes 317 are formed along the extending directions of the first protrusion 311 and the second protrusion 313. The engaging holes 317 are used to combine the upper frame 31 with the upper cap 32.

FIGs. 4 and 5 illustrate a fourth opening 306 with a predetermined shape that is formed on the top surface of the lower frame to allow the flexible printed circuit to penetrate the fourth opening 306. The fourth opening 306 is not formed coaxially with the third opening 325. Therefore, the lower frame 30 provides a flexible printed circuit moving space 302 that is recessed to a predetermined thickness on its top surface. The flexible printed circuit moving space 302 is fan-shaped.

In the lower frame 30, a through opening 304 is formed to allow a locking means 333 of the first lever to penetrate the through opening 304 and to be locked within the through opening 304. The through opening 304 is formed in the shape of the alphabet 'C'. The through opening 304 includes an assembly opening 304a for assembly of the locking means 333. The assembly opening 304a is formed in the middle of the through opening 304.

The upper cap 32 is vertically combined with the upper frame 31, in particular, with the first protrusion 311 and the second protrusion 313. Therefore, a plurality of engaging holes 326 are formed along the circumference of the upper cap 32. The upper cap 32 is combined with the upper frame 31 in such a way to cover the first opening 310 and the second opening 312 provided on the upper frame 31 and provides a first recess 321 and a second recess 322 that are accommodated in the first opening 310 and the second opening 312 to rotate and are fan-shaped. An opening 325 which the flexible printed circuit penetrates is formed between the first recess 321 and the second recess 322.

As mentioned above, the first protrusion 311 is not provided in a portion of the first opening 310 and, when the upper cap 32 is combined with the upper frame 31, the through opening 316 is formed by the thickness of the second protrusion 311. The other end 332 of the first lever penetrates the through opening 316 and is connected to the elastic body.

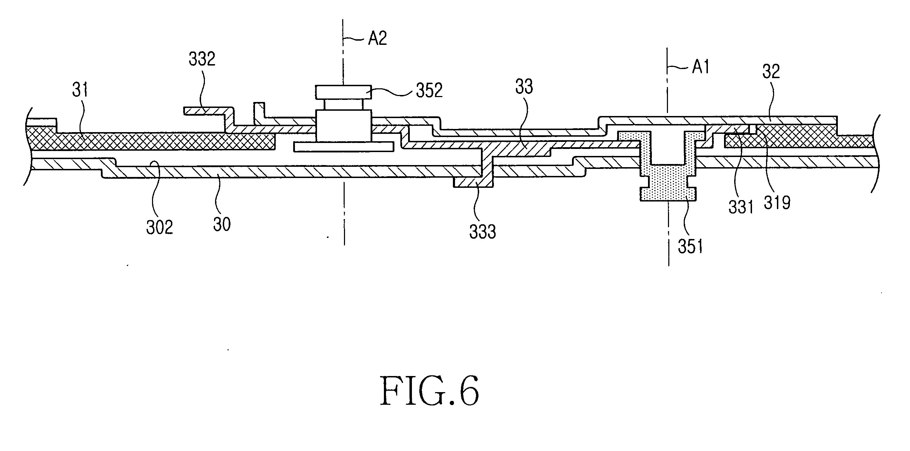

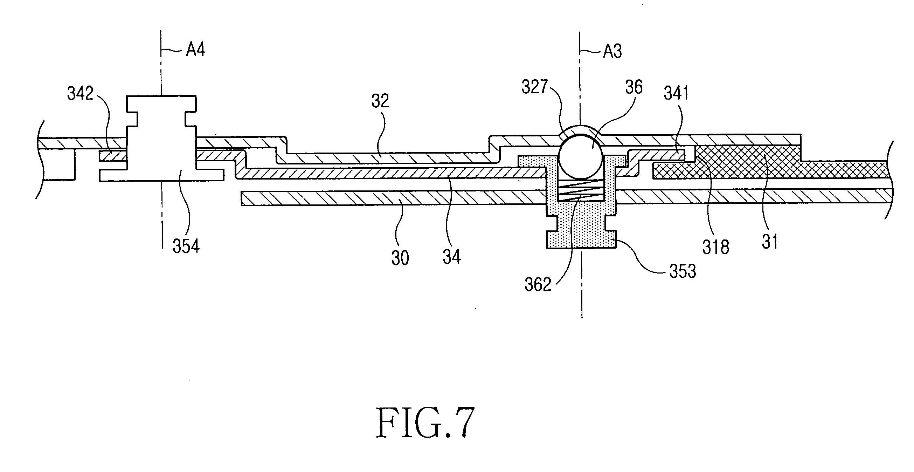

As illustrated in FIGs. 4 through 7, the link means 33 and 34 include a first link 33 that is connected to the upper frame 31 and the lower frame 30 by some of the axis means selected, such as, the axis means 351 and 352, to rotate and a second link 34 that is connected to the upper frame 31 and the lower frame 30 by the remaining axis means 353 and 354 to rotate. The first link 33 and the second link 34 are rotatably installed between the upper cap 32 and the lower frame 30 to provide a predetermined moving trace. Therefore, the first opening 310 and the second opening 312 are fan-shaped. The first link 33 and the second link 34 include a binding means to keep the upper frame 31 and the lower frame 30 facing each other. The binding means is combined with predetermined positions of the upper frame 31 and the lower frame 30 by banding predetermined positions of the first link 33 and the second link 34, specifically, both ends or the center of each of the first link 33 and the second link 34, or adding locking means on the both ends or the center. The binding means of the first link 33 and the second link 34 are illustrated in detail in FIGs. 6 and 7.

The first link 33 is divided into three regions, in which one end 331 is combined with one of the axis means, such as, the axis means 351 to be connected to the lower frame 30 with respect to a first hinge axis A1, a center 332 is combined with one of the axis means, such as, the axis means 352 to be connected to the upper cap 32 in such a way to rotate with respect to a second hinge axis A2 that is parallel with the first hinge axis A1, and the other end 333 is exposed to outside the upper cap 32 to be bound by the elastic body. The first link 33 includes the locking means 333 in its center 332. The locking means 333 is bent 90° to rotate while being bound by the lower frame 30.

The second link 34 includes one end 341 that is connected to the lower frame 30 to rotate with respect to a third hinge axis A3 that is parallel with the first hinge axis A1 and the second hinge axis A2 and the other end 342 that is connected to the upper cap 32 to rotate with respect to a fourth hinge axis A4 that is parallel with the first hinge axis A1, the second hinge axis A2, and the third hinge axis A3.

As illustrated in FIGs. 4 through 7, the axis means 351, 352, 353, and 354 rotatably connect the link means 33 and 34 to the lower frame 30 and the upper cap 32. The connection provides a curved movement of the upper frame 31. The axis means 351, 352, 353, and 354 include a first shaft member 351, a second shaft member 352, a third shaft member 353, and a fourth shaft member 354.

The first shaft member 351 is combined with a first axis hole 334 of the first link 33 and is bound by a C-ring or an E-ring (not shown) in an axis hole 301 of the lower frame 30. The second shaft member 352 is combined with a second axis hole 335 of the first link 33 and is bound by a C-ring or an E-ring (not shown) in an axis hole 323 of the upper cap 32. The third shaft member 353 is combined with a first axis hole 343 of the second link 34 and is bound by a C-ring or an E-ring (not shown) in an axis hole 303 of the lower frame 30. The fourth shaft member 354 is connected to an axis hole 324 of the upper cap 32 using a C-ring or an E-ring (not shown) in a second axis hole 344 of the second link 34. The first shaft member 351 provides the first hinge axis A1 of the first link 33, the second shaft member 352 provides the second hinge axis A2 of the first link 33, the third shaft member 353 provides the third hinge axis A3 of the second link 34, and the fourth shaft member 354 provides the fourth hinge axis A4 of the second link 34. The third shaft member 353 serves as a holding means of the upper frame 31.

The configuration of the holding means of the upper frame 31 will be described in detail.

As illustrated in FIG. 7, the upper frame 31 slides stepwise on the lower frame 30 and the portable communication apparatus of FIG. 2 is held in a fixed position by the holding means. According to an exemplary embodiment of the present invention, the holding means of the upper frame 31 includes a spring 326 provided in the internal space of the third shaft member 353, a ball 36 supported by the spring 362, and a groove 327 formed in a predetermined position of the bottom surface of the upper cap 32. The ball 36 has an elastic force for adhering closely to the groove 327 by the spring 362. For example, during sliding of the upper frame 31 on the lower frame 30, the upper frame 31 is held in a fixed position when the ball 36 is placed into the groove 327. Therefore, the elastic force provided by the spring 362 causes the ball 36 to adhere closely to the groove 327 and the adhering force between the ball 36 and the groove 327 is transformed into the holding force of the upper frame 31.

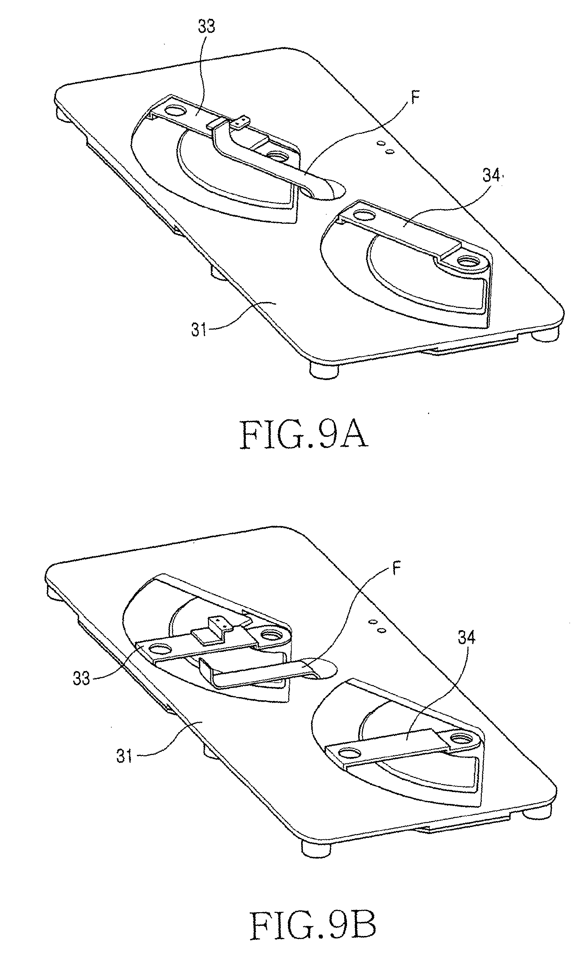

The states in which the first link 33 is combined with the upper cap 32 and the second link 34 is combined with the upper frame 31 will be described in detail with reference to FIGs. 6 and 7. FIG. 6 shows the combination state of the first link 33 and FIG. 7 shows the combination state of the second link 334. Referring to FIG. 6, in the first link 33, one end 331 is inserted into a step 319 formed along the circumference of the first opening 310 of the upper frame 31 to rotate in such a way not to be vertically separated and the other end 332 penetrates the through opening 316 of the first opening 312 to be exposed to the outside of the upper cap 32. The other end 332 is bound between the upper frame 31 and the upper cap 32 to rotate to avoid vertical separation. The locking means 333 is inserted into the through opening 304 of the lower frame 30 to rotate along the through opening 304 to avoid vertical separation. The other end 332 of the first link 33 rotates while being exposed to outside the upper cap 32 as illustrated in FIGs. 9A through 9C.

Referring to FIG. 7, in the second link 34, one end 341 is inserted into a step 318 formed along the circumference of the first opening 310 of the upper frame 31 to rotate in such a way not to be vertically separated and the other end 342 is bound between the upper frame 31 and the upper cap 32 to rotate to avoid vertical separation.

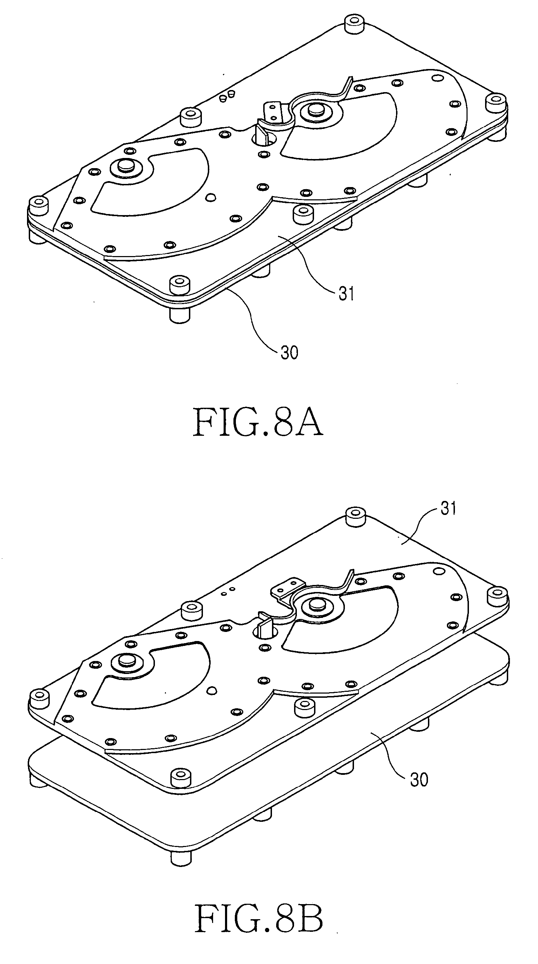

FIGs. 8A through 8C are perspective views sequentially illustrating the movement of the upper frame 31 according to an exemplary embodiment of the present invention in a stepwise direction on the lower frame 30. The elastic body is not shown in FIGs. 8A through 8C.

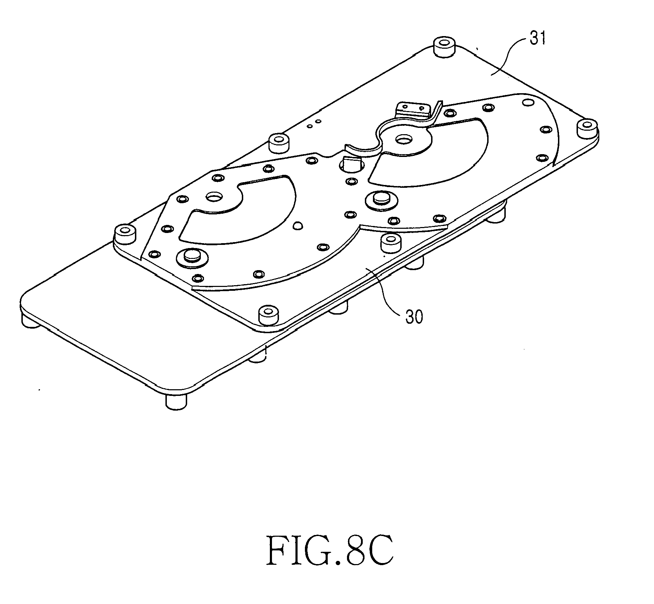

FIG. 8A shows a sliding device in the state of FIG. 1. FIG. 8B illustrates a sliding device in which the upper frame 31 moves a predetermined distance on the lower frame 30 while facing the lower frame 30 as in the state of FIG. 2. FIG. 8C shows a sliding device in which the upper frame 31 fully slides on the lower frame 30 as in the state of FIG. 3.

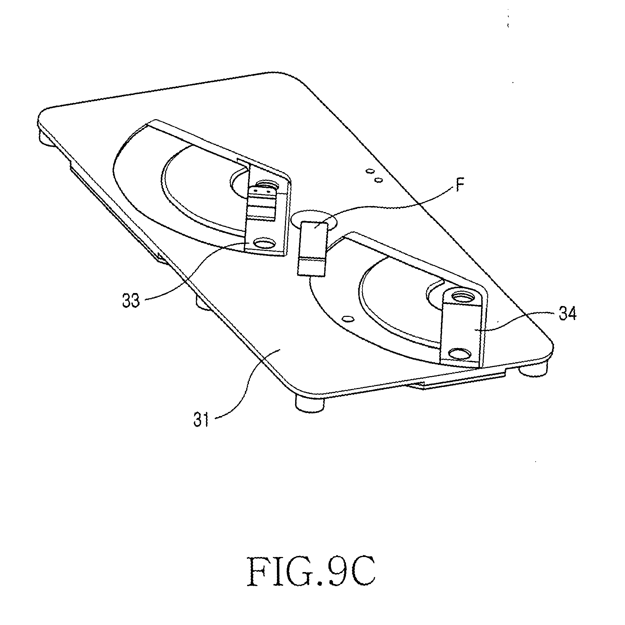

FIGs. 9A through 9C are perspective views sequentially illustrating the first link 33, the second link 34, and a flexible printed circuit F moving stepwise on the upper frame 31 according to an exemplary embodiment of the present invention. FIG. 9A illustrates a sliding device of a portable communication apparatus as illustrated in FIG. 1, in which the first link 33, the second link 34, and the flexible printed circuit F are placed. FIG. 9B illustrates a sliding device of a portable communication apparatus as illustrated in FIG. 2, in which the first link 33, the second link 34, and the flexible printed circuit F rotate together. FIG. 9C illustrates a sliding device of a portable communication apparatus as illustrated in FIG. 3, in which the first link 33, the second link 34, and the flexible printed circuit F fully slide.

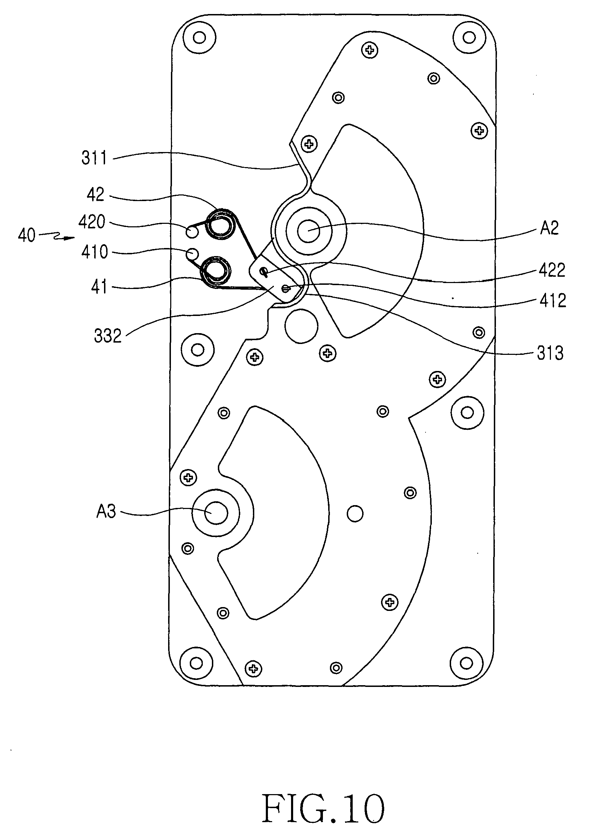

The configuration of an elastic body 40 that provides an opening/closing force for the upper frame 31, such as, a rotating force of the other end 332 of the first link 33 will be described in detail with reference to FIGs. 10 through 12.

As illustrated in FIGs. 10 through 12, the elastic body 40 is bound by the other end 332 of the first link 33. One end of the elastic body 40 is fixed in a predetermined position of the upper frame 31 and the other end of the elastic body 40 is connected to the other end 332 of the first link 33. The elastic body 40 provides a force for rotating the other end 332 of the first link 33 counterclockwise within a predetermined angle with respect to the second hinge axis A2 and a force for rotating the other end 332 of the first link 33 clockwise beyond the predetermined angle. In an exemplary implementation, rotation of the other end 332 of the first link 33 is restricted by the first protrusion 311 and the second protrusion 313.

The elastic body 40 includes a first torsion spring 41 and a second torsion spring 42 that are arranged in parallel. The first torsion spring 41 and the second torsion spring 42 include ends 412 and 422 connected to the other end 332 of the first link 33 and the other ends 410 and 420 fixed to predetermined positions of the upper frame 31 by rivet welding. If the user forcedly pushes the slider 20 in the initial state as illustrated in FIG. 1, the other end 332 rotates a predetermined angle with respect to the second hinge axis A2. The rotated state of the other end 332 and the torsion states of the first torsion spring 41 and the second torsion spring 42 are illustrated in FIG. 11. In FIGs. 10 and 11, the first torsion spring 41 and the second torsion spring 42 provide a force for rotating the other end 332 counterclockwise. If the user forcedly pushes the slider 20 in FIG. 11, the other end 332 rotates clockwise with respect to the second hinge axis A2 and the first torsion spring 41 and the second torsion spring 42 provides a force for rotating the other end 332 clockwise.

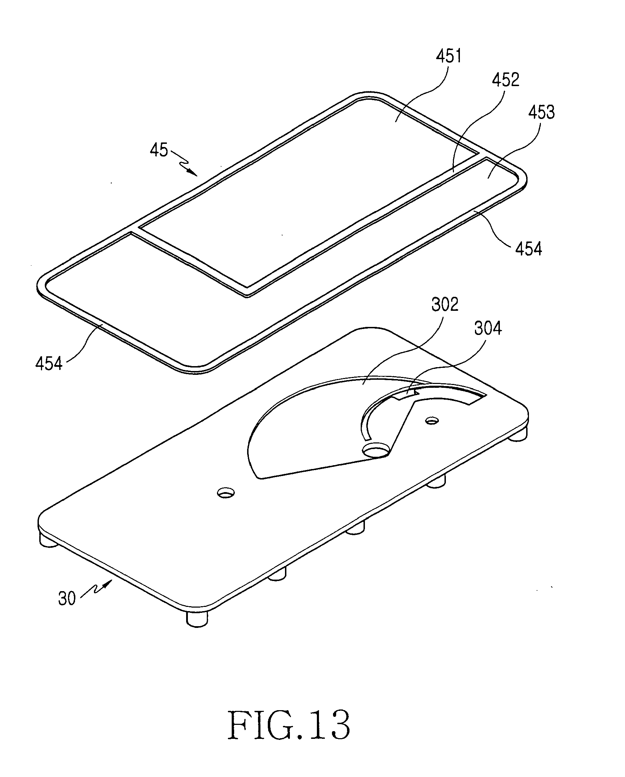

As illustrated in FIG. 13, a damper 45 may be provided between the upper frame 31 and the lower frame 30. The damper 45 absorbs a fine motion or shock generated by rotation of the link means 33 and 34 during opening/closing of the portable communication apparatus when the upper frame 31 and the lower frame 30 are combined. The absorbing function of the damper 45 facilitates opening/closing from points of view of both the portable communication apparatus and the user.

The damper 45 is attached to the lower frame 30. The damper 45 includes a first circumferential portion 452 surrounding a square 451 to cover the fan-shaped recess 302 and the through opening 304 provided on the lower frame 30 and a second circumferential portion 454 surrounding the remaining region 453. The second circumferential portion 454 is formed in the shape of the alphabet 'L'

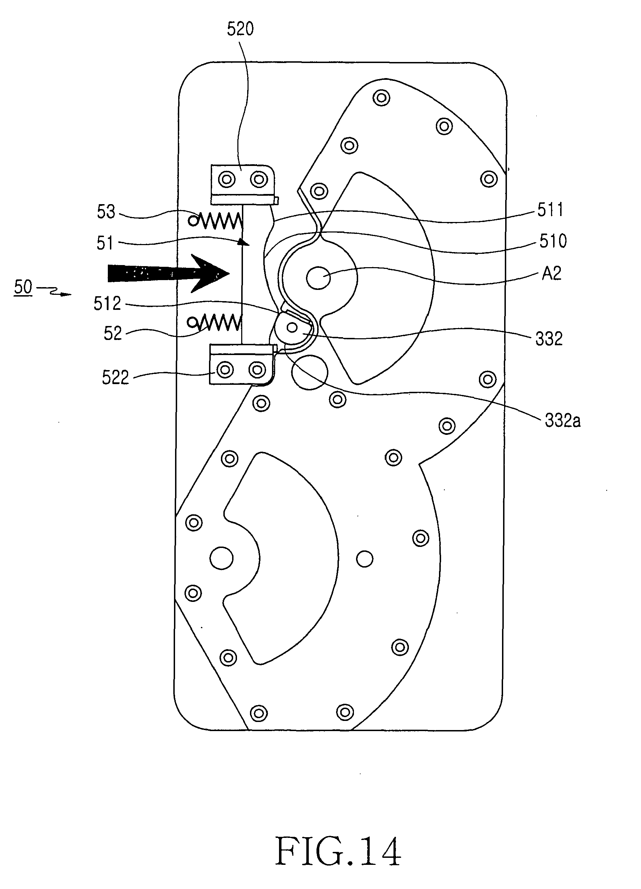

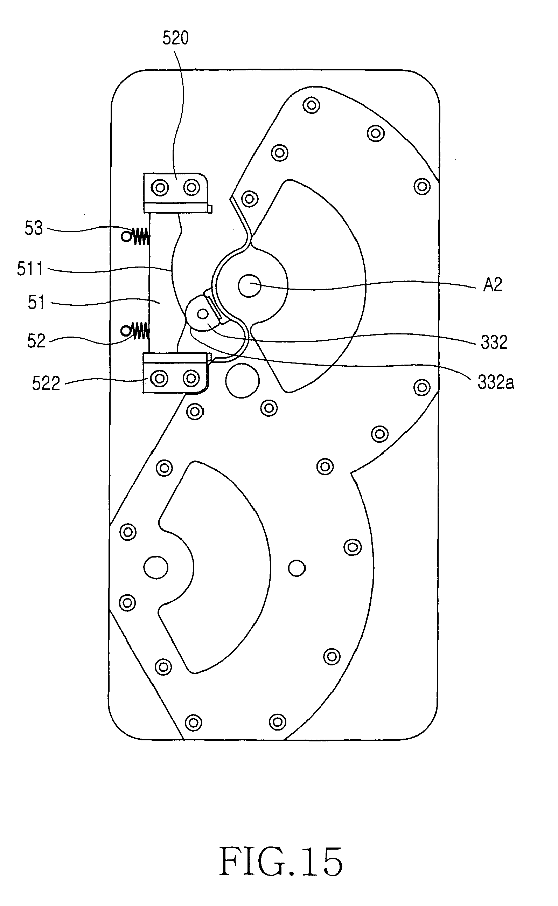

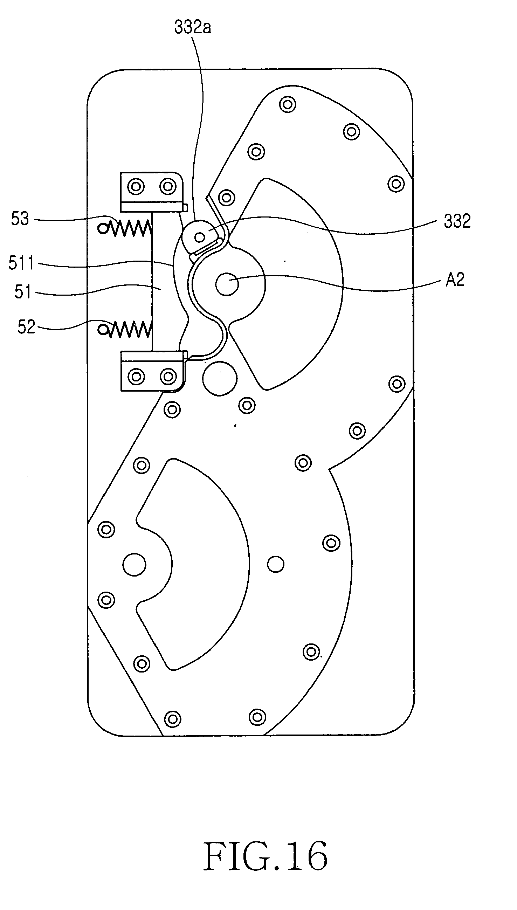

Another driving source 50 of the driving mechanism according to an exemplary embodiment of the present invention will be described with reference to FIGs. 14 through 16. In FIGs. 10 through 12, the first torsion spring 41 and the second torsion spring 42 are used as a driving source. In FIGs. 14 through 16, another elastic body (52 and 53) and a cam means 51 are used as another driving source 50. The upper frame, the lower frame, the axis means, the link means, and the holding means are analogous to the foregoing description.

The driving source 50 includes the elastic body (52 and 53) and the cam means 51 that provides a force for rotating the other end 322 clockwise or counterclockwise through a cam operation with the other end 332 of the first link 33 by the elastic body.

The cam means 51 includes a first cam face 510 and is fixed such that both ends of the cam means 51 are supported by a pair of fixing guides 520 and 522 in such a way to adhere closely to the link means, such as, the other end 332 of the first lever. In an exemplary implementation, the other end 332 includes a second cam face 332a with a shape corresponding to the shape of the first cam face 510 to adhere closely to the first cam face 510. The first cam face 510 may have a curved shape including at least one curve portions 511 and 512.

The adhering force is provided by the elastic body (52 and 53). The cam means 51 linearly moves and is provided with the adhering force in a direction opposite to the user's pushing direction for opening the slider of the portable communication apparatus. The operation of the cam means 51 is performed through sliding face contact. In an exemplary implementation, since the other end 332 of the first link 33 includes a curved face, such as, the second cam face 332a and the first cam face 510 also includes a curved face, the operation of the cam means 51 can be facilitated and the second cam face 332a can smoothly move up or down along the curve portions 511 and 512.

The elastic body for adhering the cam means 51 closely to the other end 332 includes at least one coil springs 52 and 53. In an exemplary implementation, a pair of coil springs is included to balance the cam means 51. The pair of coil springs 52 and 53 is arranged in a direction analogous to the moving direction of the cam means 51. The elastic body may be implemented with torsion springs or pan springs as well as coil springs.

Components of the sliding device according to an exemplary embodiment of the present invention can be made of metal materials. However, the components may also be made of plastic materials having rigidity for lightweight of the portable communication apparatus. The upper frame, the lower frame, or the upper cap may be made of plastic materials.

As described above, according to an exemplary embodiment of the present invention, a sliding-type portable communication apparatus can be more easily opened/closed using the thumb while being gripped by the hand. Also, a sliding device according to an exemplary embodiment of the present invention provides advantages of a slim portable communication apparatus which may be easier to use in a specific mode.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A sliding-type portable communication apparatus comprising:
a main body comprising a plurality of first keys on a main body top surface; and
a slider comprising a display device on a slider top surface; wherein the slider opens and closes the main body top surface by a closing force within a first distance from the longitudinal direction of the main body while facing the main body, and by a curved movement with an opening force beyond the first distance.

2. The sliding-type portable communication apparatus of claim 1, wherein the main body top surface comprises a main body horizontal region and a main body vertical region, the main body horizontal region and the main body vertical region are gradually opened and closed by the movement of the slider, the main body horizontal region is gradually enlarged, and the main body vertical region is gradually enlarged and then reduced.

3. The sliding-type portable communication apparatus of claim 2, wherein the main body horizontal region comprises the plurality of first keys and the main body vertical region comprises a plurality of second keys.

4. The sliding-type portable communication apparatus of claim 1, wherein a force for an initial movement of the slider is provided by pushing of the slider from a side of the slider, the side being perpendicular to the longitudinal direction of the slider.

5. The sliding-type portable communication apparatus of claim 1, wherein the main body and the slider extend in a board shape and a linear shape and comprise box shapes.

6. The sliding-type portable communication apparatus of claim 1, wherein the slider moves stepwise on the main body and provides a mode relative to a moving position.

7. A semi-automatic sliding device of a sliding-type portable communication apparatus comprising a main body and a slider opened and closed by moving on the main body, the semi-automatic sliding device comprising:
a lower frame;
an upper frame movable on the lower frame while facing the lower frame;
an upper cap provided on the upper frame to cover the upper frame while facing the upper frame; and
a driving mechanism provided between the upper cap and the lower frame;
wherein the driving mechanism moves the upper frame on the lower frame in a curved movement along a trace while binding the upper frame and the lower frame to prevent separation between the upper frame and the lower frame, and provides a moving force of the upper frame.

8. The semi-automatic sliding device of claim 7, wherein the driving mechanism comprises semi-automatic operation.

9. The semi-automatic sliding device of claim 7, wherein the driving mechanism comprises:
at least two axial connectors which connect the upper frame and the lower frame;
a linking member connected to the axial connector, wherein the linking member binds the upper frame and the lower frame to prevent the upper frame and the lower frame from being separated from each other, and provides a curve comprising the trace as a sliding direction of the upper frame; and
a driving source connected to the linking member to provide a counterclockwise rotating force within an angle and a clockwise rotating force beyond the angle as a moving force of the upper frame.

10. The semi-automatic sliding device of claim 9, wherein the linking member comprises:
a first link connected to the upper frame and the lower frame by a selected one of the axial connector to rotate; and
a second link connected to the upper frame and the lower frame by another of the axial connector to rotate.

11. The semi-automatic sliding device of claim 10, wherein the first link comprises one end connected to the lower frame to rotate with respect to a first hinge axis, a center connected to the upper cap to rotate with respect to a second hinge axis that is parallel with the first hinge axis, and the other end exposed to the outside of the upper cap, and
the second link comprises one end which is connected to the lower frame to rotate with respect to a third hinge axis that is parallel with the first hinge axis and the second hinge axis and the other end which is connected to the upper cap to rotate with respect to a fourth hinge axis that is parallel with the first hinge axis, the second hinge axis, and the third hinge axis.

12. The semi-automatic sliding device of claim 9, wherein the linking member further comprises at least one binder for keeping the upper frame and the lower frame facing each other.

13. The semi-automatic sliding device of claim 12, wherein the at least one binder is combined at a position of the upper frame and the lower frame by at least one of banding positions of the first link and the second link and adding bent means to the positions of the first link and the second link.

14. The semi-automatic sliding device of claim 9, wherein the axial connector comprises:
a first shaft member for rotatably binding one end of a selected linking member to the lower frame;
a second shaft member for rotatably binding the other end of the selected linking member to the upper cap;
a third shaft member for rotatably binding one end of another selected linking member to the lower frame; and
a fourth shaft member for rotatably binding the other end of the another selected linking member to the upper cap.

15. The semi-automatic sliding device of claim 9, wherein at least one of the axial connectors comprises a holding member for restricting the rotating angle of the upper frame.

16. The semi-automatic sliding device of claim 15, wherein the holding member comprises:
a ball;
an elastic body which is accommodated in one of the axial connector to cause the ball to adhere closely to the upper frame; and
a groove which is formed on the bottom surface of the upper frame and accommodates the ball to provide a holding force.

17. The semi-automatic sliding device of claim 7, wherein the upper frame comprises at least one fan-shaped opening.

18. The semi-automatic sliding device of claim 17, wherein the at least one opening comprises:
a first opening formed in the upper frame; and
a second opening formed in parallel with the first opening in a diagonal direction of the upper frame.

19. The semi-automatic sliding device of claim 18, wherein the first opening comprises a first protrusion comprising a first thickness along circumference thereof except for an edge portion, and the second opening comprises a second protrusion comprising a second thickness along its circumference.

20. The semi-automatic sliding device of claim 7, wherein the upper frame comprises a third opening to allow a flexible printed circuit to penetrate the third opening, the lower frame comprises a fourth opening to allow the flexible printed circuit to penetrate the fourth opening, and the lower frame comprises a flexible printed circuit moving space is formed in the lower frame to provide a rotating space of the flexible printed circuit according to rotation of the upper frame.

21. The semi-automatic sliding device of claim 20, wherein the flexible printed circuit moving space is fan-shaped.

22. The semi-automatic sliding device of claim 8, wherein the lower frame comprises a through opening to allow a portion of the link means to move while being bound by the through opening and the through opening is C-shaped.

23. The semi-automatic sliding device of claim 22, wherein the through opening comprises an assembly opening for assembly of the portion of the linking member.

24. The semi-automatic sliding device of claim 7, further comprising a damper disposed between the upper frame and the lower frame, the damper comprising a first region that is square-shaped and a second region that is L-shaped to surround two sides of the square.

25. The semi-automatic sliding device of claim 9, wherein the driving source comprises an elastic body comprising a fixing end bound by the upper frame and a free end bound by the portion of the linking member to provide a semi-automatic rotating force of the linking member.

26. The semi-automatic sliding device of claim 7, wherein the driving mechanism further comprises a cam.

27. The semi-automatic sliding device of claim 26, wherein the driving mechanism comprises:
a cam comprising a first cam face;
an elastic body which causes the cam to adhere to the linking member; and
a second cam face which is disposed in the linking member, the second cam face comprising a shape corresponding to the first cam face to maintain adherence to the first cam face.

28. The semi-automatic sliding device of claim 27, wherein the first cam face comprises a curved shape comprising at least one curve portion.

29. A semi-automatic sliding device of a sliding-type portable communication apparatus comprising a main body and a slider opened and closed by moving on the main body, the semi-automatic sliding device comprising:
an upper frame and a lower frame facing each other;
an upper cap combined with the upper frame to cover the upper frame while facing the upper frame;
at least one linking member for binding the upper frame and the lower frame to prevent the upper frame and the lower frame from being separated from each other, the at least one linking member being connected to at least two axial connectors to provide a curve as a sliding direction of the upper frame, and comprising one end that rotates with respect to a first hinge axis by a selected one of the axial connectors, a center that rotates with respect to a second hinge axis by another of the axial connectors, and the other end that rotates with respect to the first hinge axis and the second hinge axis; and
an elastic body comprising one end connected to the other end of the linking member to provide a clockwise rotating force within an angle and a counterclockwise rotating force beyond the angle as a moving force of the upper frame.

30. The semi-automatic sliding device of claim 29, wherein the elastic body comprises a pair of first and second elastic bodies.

31. The semi-automatic sliding device of claim 30, wherein the first elastic body and the second elastic body comprise fixed ends that are fixed on the upper frame and free ends that are connected to the other end of the linking member to semi-automatically provide a moving force of the upper frame.

32. The semi-automatic sliding device of claim 30, wherein the other end of the linking member rotates while being exposed to an outside of the upper cap.

33. The semi-automatic sliding device of claim 30, wherein rotation of the other end of the linking member is restricted by the upper frame.

34. The semi-automatic sliding device of claim 30, wherein at least one of the linking members comprises one end bound by the upper cap, the other end exposed between the upper frame and the upper cap, and a center bound by the lower frame.

35. The semi-automatic sliding device of claim 29, wherein the first hinge axis is fixed and the second hinge axis moves along a curved trace.

36. The semi-automatic sliding device of claim 11, wherein the linking member further comprises a binder for keeping the upper frame and the lower frame facing each other.

37. The sliding portable communication apparatus of claim 1, wherein an easier initial movement of the slider is provided by the curved movement.
